# EUROPÄISCHE PATENTSCHRIFT

(11) **EP 3 267 622 B1**
(45) Veröffentlichungstag und Bekanntmachung des Hinweises auf die Patenterteilung: **28.08.2019**
(21) Anmeldenummer: 16178682.7
(22) Anmeldetag: 08.07.2016
(51) Int. Cl.: H04L 12/24

(54) **VORRICHTUNGEN UND VERFAHREN ZUM BETREIBEN EINES KOMMUNIKATIONSNETZWERKES**
DEVICES AND METHOD FOR OPERATING A COMMUNICATION NETWORK
DISPOSITIFS ET PROCÉDÉ DESTINÉS AU FONCTIONNEMENT D'UN RÉSEAU DE COMMUNICATION

(43) Veröffentlichungstag der Anmeldung: 10.01.2018
(73) Patentinhaber: Deutsche Telekom AG, 53113 Bonn (DE)
(72) Erfinder: Gludovacz, Dieter, 2521 Trumau (AT)
(74) Vertreter: Vossius & Partner Patentanwälte Rechtsanwälte mbB

(56) Entgegenhaltungen:
- EP-A1- 2 665 326
- GB-A- 2 502 581
- Mikko Säily ET AL: "Mobile and wireless communications Enablers for the Twenty-twenty Information Society-II Deliverable D6.1 Draft Asynchronous Control Functions and Overall Control Plane Design", , 30. Juni 2016 (2016-06-30), XP55322758, Gefunden im Internet: URL:https://metis-ii.5g-ppp.eu/wp-content/ uploads/deliverables/METIS-II_D6.1_V1.0.pd f [gefunden am 2016-11-24]
- PANWAR NISHA ET AL: "A survey on 5G: The next generation of mobile communication", PHYSICAL COMMUNICATION, Bd. 18, 11. November 2015 (2015-11-11), Seiten 64-84, XP029429474, ISSN: 1874-4907, DOI: 10.1016/J.PHYCOM.2015.10.006

## Beschreibung

Die Erfindung betrifft Vorrichtungen und Verfahren zum Betreiben eines Kommunikationsnetzwerkes, insbesondere zum Betreiben eines 5G-Kommunikationsnetzwerks.

Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (loT), spezielle Fähigkeiten wie z.B. geringerer Laufzeit, welche über das hinausgehen, was 4G Kommunikationsnetze leisten können. Dabei wird 5G als ein Ende-zu-Ende System betrachtet, das sämtliche Netzwerkaspekte beinhaltet, und zwar mit einem Design, das einen hohen Grad an Konvergenz ermöglicht. 5G wird die heutigen Zugangsmechanismen und deren mögliche Weiterentwicklungen vollständig nutzen, einschließlich der heutigen Festnetzzugangstechnologien sowie vieler anderer noch zu entwickelnder Zugangstechnologien.

5G wird in einem stark heterogenen Umgebung operieren, d.h. mit mehreren Typen von Zugangstechnologien, mehrschichtigen Netzwerken, vielfältigen Typen von Kommunikationsgeräten und Nutzerinteraktionen und dergleichen. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Räumen. In solch einer Umgebung gibt es ein fundamentales Verlangen nach 5G, um ein nahtloses und konsistentes Nutzererlebnis über Zeit und Raum zu erfüllen. Für den Betreiber eines 5G-Kommunikationsnetzwerkes besteht die Notwendigkeit die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis danach, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich zu erreichen, und zum anderen aber auch die Flexibilität im Betrieb des Kommunikationsnetzwerkes zu erhöhen sowie maßgeschneiderte Funktionen mit dem geringstmöglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauen, Identität und Privatsphäre der Nutzer erwartet.

Es ist davon auszugehen, dass die Zahl an Kommunikationsgeräten, die auf die Dienste eines Kommunikationsnetzwerks, beispielsweise eines Kommunikationsnetzwerkes gemäß dem 5G-Standard zugreifen, in Zukunft stark zunehmen wird. Aufgrund der steten Weiterentwicklungen im Bereich der Computertechnologie wird parallel hierzu auch die technische Leistungsfähigkeit der Kommunikationsgeräte selbst, insbesondere von Smartphones, immer mehr zunehmen. Im Lichte dieser Entwicklungen ist absehbar, dass in zukünftigen Kommunikationsnetzwerken, insbesondere in Kommunikationsnetzwerken gemäß dem 5G-Standard, eine große Menge an Ressourcen, wie Rechenleistung, Speicherplatz und dergleichen, im Prinzip vorhanden sind. Diese Ressourcen, die sowohl Hardware- als auch Softwareressourcen umfassen können, in einem Kommunikationsnetzwerk effizient zur Verfügung zu stellen, stellt eine große Herausforderung für zukünftige Kommunikationsnetzwerke dar.

Es ist daher die Aufgabe der vorliegenden Erfindung, ein Konzept zu schaffen, um die in einem Kommunikationsnetzwerk vorhandenen Ressourcen effizient einzusetzen.

EP 2 665 326 A1 beschreibt einen Scheduler für ein Mobilfunkkommunikationsnetzwerk. Der Scheduler ist ausgebildet, topographische Informationen über ein geographisches Gebiet zu erhalten, das von dem Mobilfunkkommunikationsnetzwerk abgedeckt wird. Ferner ist der Scheduler ausgebildet, Informationen über die jeweilige Position eines ersten und eines zweiten Kommunikationsendgerätes innerhalb des geographischen Gebiets zu erhalten. Auf der Basis der topographischen Informationen und der Positionsinformationen entscheidet der Scheduler, ob eine direkte drahtlose Kommunikation zwischen dem ersten und zweiten Kommunikationsendgerät eingerichtet werden soll und, falls dem so ist, die entsprechenden Frequenz- und/oder Zeitressourcen dem ersten und zweiten Kommunikationsendgerät bereitzustellen.

GB 2 502 581 A beschreibt ein D2D-Kommunikationssystem sowie unterschiedliche Anwendungsfälle für ein solches D2D-Kommunikationssystem, beispielsweise "network offloading".

Die vorstehend genannte Aufgabe wird durch die Merkmale der unabhängigen Ansprüche gelöst. Vorteilhafte Weiterbildungsformen sind Gegenstand der abhängigen Ansprüche.

Die im Folgenden vorgestellten Geräte, Systeme und Verfahren können auf verschiedene Arten und Weisen implementiert sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

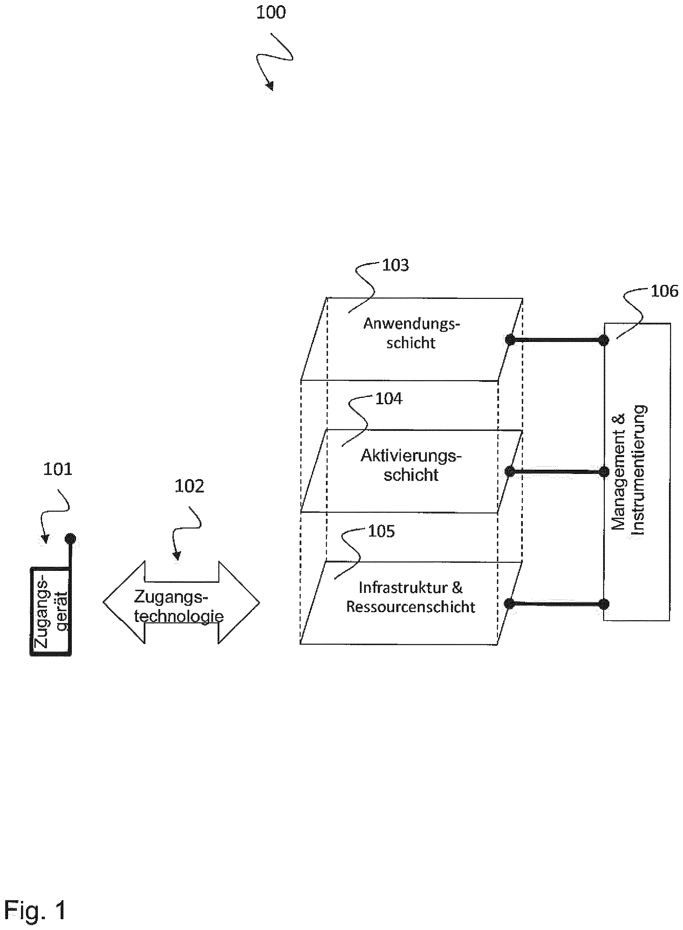

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G-Systemarchitektur. Figur 1 zeigt eine schematische Darstellung einer solchen 5G-Systemarchitektur 100. Die 5G-Systemarchitektur 100 umfasst einen Bereich mit 5G-Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G-Geräten wie z.B. Mobiltelefonen, tragbaren Geräten, Maschinenkommunikationsmodulen und dergleichen. 5G-Geräte können vielfältige und konfigurierbare Fähigkeiten aufweisen und beispielsweise als Relay oder Hub agieren oder abhängig von dem jeweiligen Kontext als Computer/Speicher-Ressource arbeiten. Diese Ressourcen werden den höheren Schichten 104, 103 und der Management- & Instrumentierungsebene 106 über entsprechende APIs (Anwendungsprogrammier-Schnittstellen) zur Verfügung gestellt. Das Überwachen der Leistungsfähigkeit und der Konfigurationen können inhärenter Teil solcher APIs sein.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, sowie einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden, und zwar durch Nutzung der dafür vorgesehenen APIs. Für bestimmte Funktionen können mehrfache Varianten existieren, z.B. verschiedene Implementierungen derselben Funktionalität, welche unterschiedliche Leistungsfähigkeiten oder Charakteristiken haben. Die verschiedenen Grade der Leistungsfähigkeit und der angebotenen Fähigkeiten können dazu verwendet werden, um die Netzwerkfunktionalitäten wesentlich weiter zu unterscheiden, als es in heutigen Netzen möglich ist, beispielsweise als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, von Unternehmen, vertikalen Operatoren oder von Drittparteien, die das 5G-Netzwerk nutzen. Die Schnittstelle zu der Management- & Instrumentierungsebene 106 erlaubt zum Beispiel, bestimmte, d.h. dedizierte Netzwerk-Slices für eine Anwendung aufzubauen, oder eine Anwendung einer existierenden Netzwerk-Slice zuzuweisen.

Die Management- & Instrumentierungsebene 106 ist der Kontaktpunkt, um die geforderten Anwendungsfälle in tatsächliche Netzwerkfunktionen und Slices umzusetzen. Sie definiert die Netzwerk-Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet ferner sowohl die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk-Slices zu erzeugen und zu verwalten. Aufgrund der vielzähligen Aufgaben der Management- & Instrumentierungsebene 106 handelt es sich dabei in der Regel nicht um einen monolithischen Block von Funktionalität, sondern vielmehr um eine Sammlung modularer Funktionen, die Fortschritte integrieren, die in verschiedenen Netzwerkdomänen erzielt werden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und Dienstbereitstellung zu optimieren.

Die hier vorgestellten Geräte, Systeme und Verfahren sind dazu vorgesehen, die Kommunikation in Kommunikationsnetzen zu verbessern, insbesondere in 5G-Kommunikationsnetzen mit mehreren Netzwerk-Slices, wie im Folgenden beschrieben.

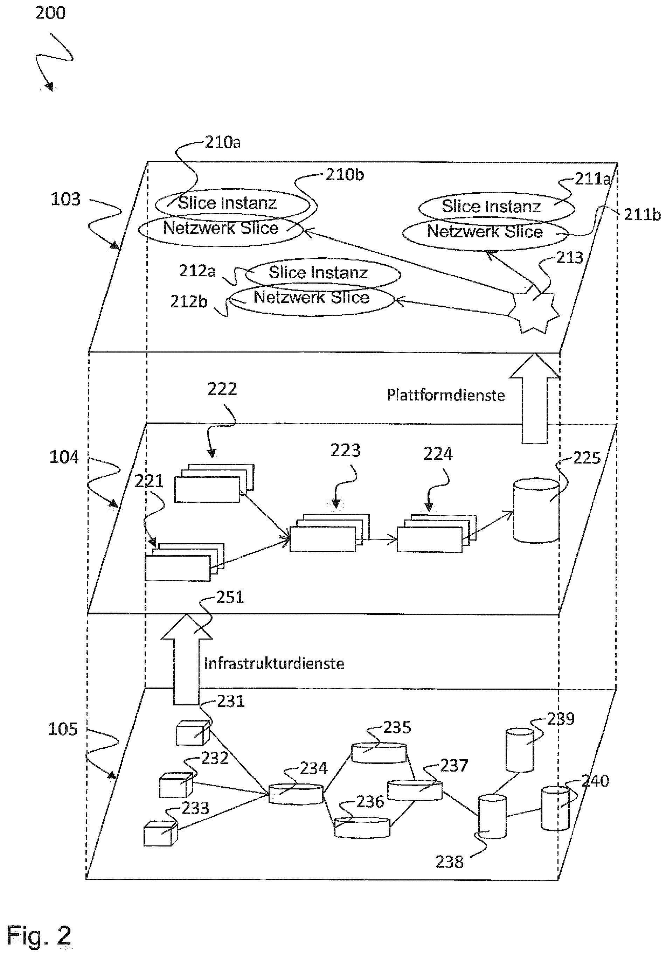

Figur 2 zeigt eine schematische Darstellung eines 5G-Kommunikationsnetzwerks 200 mit mehreren Netzwerk-Slices. Das 5G-Kommunikationsnetzwerk 200 umfasst eine Infrastruktur- & Ressourcenschicht 105, eine Aktivierungsschicht 104 und eine Anwendungsschicht 103.

Die Infrastruktur- & Ressourcenschicht 105 umfasst die gesamte physikalische Infrastruktur, die einem Netzwerkbetreiber zugeordnet ist, d.h. Standorte, Kabel, Netzwerkknoten und dergleichen. Diese Schicht 105 bildet die Grundlage für alle Netzwerk-Slices. Sie ist so generisch wie möglich aufgebaut, um die Zahl der spezialisierten physikalischen Einheiten auf ein Mindestmaß zu beschränken. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Softwareobjekten hinzu, um das Erzeugen von jeder Art von Netzwerk-Slices zu ermöglichen und so eine Plattform als Dienst der nächsthöheren Schicht 103 bereitzustellen.

Softwareobjekte können in jeder Granularität vorliegen, und ein winziges oder ein sehr großes Fragment einer Netzwerk-Slice umfassen. Um die Erzeugung von Netzwerk-Slices auf einem geeigneten Abstraktionslevel zu erlauben, können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekte 224 überführt werden können und in einer Objektbibliothek 225 der nächsthöheren Ebene zur Verfügung gestellt werden. Damit kann die Komplexität hinter den Netzwerk-Slices verborgen werden. Beispielsweise kann ein Nutzer bzw. Kunde eine mobile Breitband-Slice erzeugen und dabei lediglich KPIs (Key Performance Indikatoren) definieren, ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einer Netzwerk-Slice unterstützt, z.B. durch Verwendung von SFC ("Service Function Chaining" = Dienstfunktionenverkettung) oder modifizierender Software, so dass die Funktionalität einer Slice vollständig vordefiniert werden kann und sowohl näherungsweise statische Softwaremodule als auch dynamisch hinzufügbare Softwaremodule umfassen kann.

Eine Netzwerk-Slice kann dabei als software-definierte Entität betrachtet werden, die auf einem Satz von Objekten basiert, welche ein vollständiges Netzwerk definieren. Die Aktivierungsschicht 104 spielt für dieses Konzept eine Schlüsselrolle, da sie alle Softwareobjekte umfassen kann, die notwendig sind, um die Netzwerk-Slice und die entsprechenden Fertigkeiten zum Handhaben der Objekte bereitzustellen. Die Aktivierungsschicht 104 kann als eine Art von Netzwerk-Betriebssystem betrachtet werden, komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk-Slices auszugestalten, während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln einer Netzwerk-Slice-Umgebung.

Eine Netzwerk-Slice, auch als 5G-Slice bezeichnet, unterstützt die Kommunikationsdienste eines bestimmten Verbindungstyps mit einer bestimmten Art der Handhabung der C- (Control bzw. Steuerungs-) und U-(User Data bzw. Nutzerdaten) Schicht, auch als "Control Plane" und "User Plane" bezeichnet. Eine 5G-Slice setzt sich zusammen aus einer Sammlung von verschiedenen 5G-Netzwerkfunktionen und spezifischen Funkzugangstechnologie-Einstellungen (RAT = radio access technology), die für den spezifischen Anwendungsfall miteinander kombiniert werden. Daher kann eine 5G-Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie sowie eine Konfiguration der 5G-Geräte. Nicht alle Slices enthalten dieselben Funktionen, einige Funktionen, die heute für ein mobiles Netzwerk als wesentlich erscheinen, können sogar in einigen Slices nicht vorkommen. Die Intention einer 5G-Slice ist es, nur die Funktionen bereitzustellen, die für den spezifischen Anwendungsfall notwendig sind, und alle anderen unnötigen Funktionalitäten zu vermeiden. Die Flexibilität hinter dem Slice-Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte von Slices über geeignete APIs zu steuern, um so maßgeschneiderte Dienste bereitstellen zu können.

Die Anwendungsschicht 103 umfasst alle erzeugten Netzwerk-Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk-Slices 210b, 211b, 212b für verschiedene Anwender, beispielsweise als eine neue Netzwerk-Slice-Instanz 210a, 211a, 212a. Beispielsweise kann eine Netzwerk-Slice 210b, 211b, 212b, welche beispielsweise einer Automotive-Anwendung zugeordnet ist, auch für verschiedene andere industrielle Anwendungen genutzt werden. Die Slice-Instanzen 210a, 211a, 212a, die von einem ersten Anwender erzeugt wurden, können beispielsweise unabhängig von den Slice-Instanzen sein, die von einem zweiten Anwender erzeugt wurden, und das obwohl die gesamte Netzwerk-Slice-Funktionalität dieselbe sein kann.

Die Kernidee der Erfindung besteht darin, die Hardware- und/oder Softwareressourcen eines mobilen Kommunikationsgeräts, insbesondere eines Smartphones, der Infrastrukturebene eines Kommunikationsnetzwerks, insbesondere eines Kommunikationsnetzwerkes gemäß dem 5G-Standard zur Verfügung zu stellen. Dies erlaubt es beispielsweise, Netzwerkfunktionen einer Netzwerk-Slice, d.h. eines logischen Subnetzwerks des Kommunikationsnetzwerks auf dem mobilen Kommunikationsgerät bereitzustellen. Dabei erfolgt erfindungsgemäß das Einbinden des mobilen Kommunikationsgeräts in die Netzwerk-Slice, wenn sich das mobile Kommunikationsgerät in einen vordefinierten räumlichen Bereich hinein bewegt.

Vor diesem Hintergrund betrifft die Erfindung gemäß einem ersten Aspekt eine Netzwerkmanagemententität für ein Kommunikationsnetzwerk. Die Netzwerkmanagemententität umfasst einen Prozessor, welcher ausgebildet ist, eine Netzwerk-Slice in dem Kommunikationsnetzwerk zu betreiben, wobei die Netzwerk-Slice ausgebildet ist, einem ersten Kommunikationsgerät die Kommunikation über die Netzwerk-Slice zu ermöglichen und dem ersten Kommunikationsgerät weitere Ressourcen der Netzwerk-Slice bereitzustellen, und eine Kommunikationsschnittstelle, welche ausgebildet ist, ein Positionssignal von einer Erfassungsreinrichtung zu empfangen, wobei das Positionssignal eine Position eines zweiten mobilen Kommunikationsgeräts anzeigt. Der Prozessor ist ferner ausgebildet, das zweite mobile Kommunikationsgerät in die Netzwerk-Slice einzubinden, um der Netzwerk-Slice Ressourcen des zweiten mobilen Kommunikationsgeräts bereitzustellen, falls die erfasste Position des zweiten mobilen Kommunikationsgeräts in einen definierten Bereich von Positionen fällt. Der Prozessor ist ferner ausgebildet, über die Kommunikationsschnittstelle eine Applikation auf dem zweiten mobilen Kommunikationsgerät frei zu schalten, wobei die Applikation zumindest einen Teil der Ressourcen des zweiten mobilen Kommunikationsgeräts bereitstellen kann.

In einer Ausführungsform kann das Kommunikationsnetzwerk ein gemäß dem 5G-Standard ausgebildetes Kommunikationsnetzwerk sein. In einer Ausführungsform kann die Netzwerkmanagemententität als SDN-Orchestrator ausgebildet sein. In einer Ausführungsform kann das erste Kommunikationsgerät und/oder das zweite mobile Kommunikationsgerät ein Mobiltelefon, insbesondere ein Smartphone sein.

In einer Ausführungsform ist der Prozessor ferner ausgebildet, zu überprüfen, ob das erste Kommunikationsgerät eine Berechtigung dafür aufweist, auf die vom zweiten mobilen Kommunikationsgerät bereitgestellten Ressourcen in der Netzwerk-Slice zuzugreifen.

In einer Ausführungsform ist der Prozessor ferner ausgebildet, zu überprüfen, ob das zweite mobile Kommunikationsgerät eine Berechtigung dafür aufweist, in die Netzwerk-Slice eingebunden zu werden.

In einer Ausführungsform ist der Prozessor ferner ausgebildet, die Applikation über die Kommunikationsschnittstelle auf dem zweiten mobilen Kommunikationsgerät bereitzustellen, um zumindest einen Teil der Ressourcen des zweiten mobilen Kommunikationsgeräts bereitzustellen.

In einer Ausführungsform ist der Prozessor ferner ausgebildet, über die Kommunikationsschnittstelle das erste Kommunikationsgerät über die vom zweiten mobilen Kommunikationsgerät bereitgestellten Ressourcen zu informieren.

In einer Ausführungsform ist der Prozessor ferner ausgebildet, zumindest einen Teil der weiteren Ressourcen der Netzwerk-Slice auf der Grundlage der vom zweiten mobilen Kommunikationsgerät bereitgestellten Ressourcen anzupassen.

Gemäß einem zweiten Aspekt betrifft die Erfindung ein Verfahren zum Betreiben eines Kommunikationsnetzwerkes, wobei das Verfahren umfasst: das Betreiben einer Netzwerk-Slice in dem Kommunikationsnetzwerk, wobei die Netzwerk-Slice ausgebildet ist, einem ersten Kommunikationsgerät die Kommunikation über die Netzwerk-Slice zu ermöglichen und dem ersten Kommunikationsgerät weitere Ressourcen der Netzwerk-Slice bereitzustellen, das Erfassen einer Position eines zweiten mobilen Kommunikationsgeräts mittels eines Positionssignals, und, falls die erfasste Position des zweiten mobilen Kommunikationsgeräts in einen definierten Bereich von Positionen fällt, das Einbinden des zweiten mobilen Kommunikationsgeräts in die Netzwerk-Slice, um der Netzwerk-Slice Ressourcen des zweiten mobilen Kommunikationsgeräts bereitzustellen.

In einer Ausführungsform kann das Kommunikationsnetzwerk ein gemäß dem 5G-Standard ausgebildetes Kommunikationsnetzwerk sein. In einer Ausführungsform kann die Netzwerkmanagemententität als SDN-Orchestrator ausgebildet sein. In einer Ausführungsform kann das erste Kommunikationsgerät und/oder das zweite mobile Kommunikationsgerät ein Mobiltelefon, insbesondere ein Smartphone sein.

In einer Ausführungsform umfasst das Verfahren den weiteren Schritt des Überprüfens, ob das erste Kommunikationsgerät eine Berechtigung dafür aufweist, auf die vom zweiten mobilen Kommunikationsgerät bereitgestellten Ressourcen in der Netzwerk-Slice zuzugreifen.

In einer Ausführungsform umfasst das Verfahren den weiteren Schritt des Überprüfens, ob das zweite mobile Kommunikationsgerät eine Berechtigung dafür aufweist, in die Netzwerk-Slice eingebunden zu werden.

In einer Ausführungsform umfasst das Verfahren den weiteren Schritt, eine Applikation auf dem zweiten mobilen Kommunikationsgerät frei zu schalten, wobei die Applikation zumindest einen Teil der Ressourcen des zweiten mobilen Kommunikationsgeräts bereitstellt.

In einer Ausführungsform umfasst das Verfahren den weiteren Schritt, dass die Applikation auf dem zweiten mobilen Kommunikationsgerät von einer Netzwerkmanagemententität des Kommunikationsnetzwerkes bereitgestellt wird, um zumindest einen Teil der Ressourcen des zweiten mobilen Kommunikationsgeräts bereitzustellen.

In einer Ausführungsform umfasst das Verfahren den weiteren Schritt, das erste Kommunikationsgerät über die vom zweiten mobilen Kommunikationsgerät bereitgestellten Ressourcen zu informieren.

In einer Ausführungsform umfasst das Verfahren den weiteren Schritt, zumindest einen Teil der weiteren Ressourcen der Netzwerk-Slice auf der Grundlage der vom zweiten mobilen Kommunikationsgerät bereitgestellten Ressourcen anzupassen.

Gemäß einem dritten Aspekt betrifft die Erfindung ein Computerprogrammprodukt mit Computerprogrammcode zur Durchführung des Verfahrens gemäß dem zweiten Aspekt der Erfindung.

Weitere Ausführungsbeispiele werden Bezug nehmend auf die beiliegenden Zeichnungen erläutert. Es zeigen:
- Fig. 1: eine schematische Darstellung der Architektur eines 5G-Kommunikationsnetzwerkes;
- Fig. 2: eine schematische Darstellung eines 5G-Kommunikationsnetzwerks mit mehreren Netzwerk-Slices;
- Fig. 3: eine schematische Darstellung eines Kommunikationsnetzwerks mit einer Netzwerkmanagemententität gemäß einer Ausführungsform; und
- Fig. 4: eine schematische Darstellung eines Verfahrens zum Betreiben eines Kommunikationsnetzwerkes gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Merkmale verzichtet.

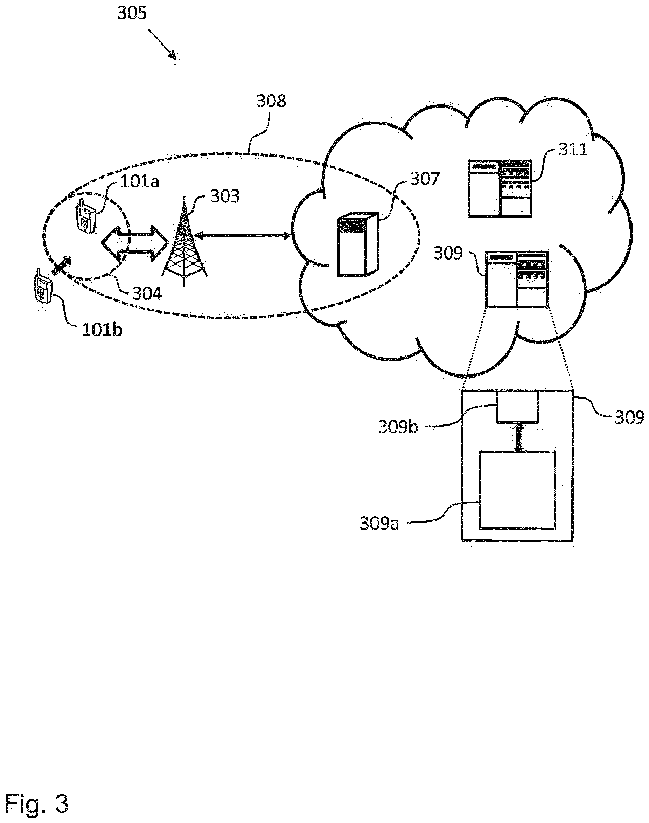

Figur 3 zeigt eine schematische Darstellung eines Kommunikationsnetzwerks 305 gemäß einer Ausführungsform. Das Kommunikationsnetzwerk 305 kann gemäß einem oder mehreren Mobilfunkstandards ausgebildet sein. Bei der in Figur 3 dargestellten Ausführungsform handelt es sich bei dem Kommunikationsnetzwerk 305 um ein Mobilfunkkommunikationsnetzwerk 305 gemäß dem 5G-Standard.

Das Kommunikationsnetzwerk 305 umfasst eine Netzwerkmanagemententität 309, die einen Prozessor 309a und eine Kommunikationsschnittstelle 309b umfasst. Gemäß einer Ausführungsform kann es sich bei der Netzwerkmanagemententität 309 um einen SDN-Orchestrator 309 handeln, wobei die Abkürzung SDN für "Software Defined Networking" steht.

Der Prozessor 309a der Netzwerkmanagemententität 309 ist ausgebildet, ein logisches Subnetzwerk 308 in dem Kommunikationsnetzwerk 305 zu betreiben, wobei es sich bei dem logischen Subnetzwerk 308 um eine Netzwerk-Slice 308 handelt. Wie bereits vorstehend beschrieben, bezeichnet der Begriff "Netzwerk-Slice" bzw. "Netzwerk-Slicing" ein Konzept zum Betreiben eines oder mehrerer logischer Netzwerke als virtuell unabhängige, d.h. logisch entkoppelte, Einheiten auf einer gemeinsamen physikalischen Netzwerk-Infrastruktur. In diesem Sinne stellt eine Netzwerk-Slice ein unabhängiges virtuelles Ende-zu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten. Für weitere Details zu Netzwerk-Slices im Sinne der vorlegenden Erfindung wird auf "NGMN 5G White Paper" und insbesondere auf den Abschnitt 5.4 davon verwiesen, das auf der Webseite der "NGMN Alliance" unter der URL "https://www.ngmn.org/home.html" abgerufen werden kann und auf das hiermit vollumfänglich Bezug genommen wird.

Neben der Netzwerkmanagemententität 309, beispielsweise in Form eines SDN-Orchestrators, kann ferner ein SDN-Controller 311 vorgesehen sein, der für die in der Netzwerk-Slice 308 notwendigen Vernetzung dient, insbesondere zum Weiterleiten von Datenpaketen in der Netzwerk-Slice 308 auf der Basis von Switches, die vom SDN-Controller 311 gesteuert werden.

Der Prozessor 309a der Netzwerkmanagemententität 309 ist ausgebildet, die Netzwerk-Slice 308 so auszubilden, einem ersten Kommunikationsgerät 101a, das sich in einem vordefinierten Positionsbereich 304 befindet, die Kommunikation über die Netzwerk-Slice 308, beispielsweise den Zugang zu einem Datennetz, insbesondere dem Internet, zu ermöglichen und dem ersten Kommunikationsgerät 101a weitere Ressourcen der Netzwerk-Slice 308 bereitzustellen. Diese weiteren Ressourcen können in der Netzwerk-Slice 308 zur Verfügung stehende Hardware- und/oder Softwareressourcen sein. Ferner können diese weiteren Ressourcen Netzwerkfunktionen umfassen, die von der Netzwerk-Slice 308 als virtualisierte Netzwerkfunktionen ("network functions virtualization") bereitgestellt werden. Diese weiteren Ressourcen der Netzwerk-Slice 308 können beispielsweise auf einem Server 307 instanziiert sein, der in die Netzwerk-Slice 308 eingebunden ist.

In einer Ausführungsform kann das erste Kommunikationsgerät 101a ein stationäres Kommunikationsgerät, wie beispielsweise ein Desktopcomputer, oder ein mobiles Kommunikationsgerät, wie beispielsweise ein Smartphone, ein Tablet-Computer oder ein Laptop-Computer, sein. Das erste Kommunikationsgerät 101a kann dazu ausgebildet sein, mit einer Basisstation 303 zu kommunizieren, um als Teil der Netzwerk-Slice 308 über das Kommunikationsnetzwerk 305 kommunizieren zu können. Die Basisstation 303 kann beispielsweise eine WLAN-Basisstation und/oder eine Mobilfunk-Basisstation sein. Die Kommunikation zwischen dem ersten Kommunikationsgerät 101a und der Basisstation 307 kann somit drahtlos, in anderen Ausführungsformen aber auch drahtgebunden erfolgen.

Die Kommunikationsschnittstelle 309b der Netzwerkmanagemententität 309 ist ausgebildet, ein Positionssignal von einer Erfassungsreinrichtung zu empfangen, wobei das Positionssignal eine Position eines zweiten mobilen Kommunikationsgeräts 101b, insbesondere eines Smartphones anzeigt. In einer Ausführungsform kann die Erfassungseinrichtung Teil des zweiten mobilen Kommunikationsgeräts 101b sein und beispielsweise einen Bewegungssensor und/oder ein GPS-Modul zum Erzeugen des Positionssignals umfassen. In einer weiteren Ausführungsform kann die Erfassungseinrichtung zum Erfassen der Position des zweiten Kommunikationsgeräts 101b als Teil der Basisstation 303 implementiert sind.

Der Prozessor 309a der Netzwerkmanagemententität 309 ist ferner ausgebildet, das zweite mobile Kommunikationsgerät 101b in die Netzwerk-Slice 308 einzubinden, um der Netzwerk-Slice 308 Hardware- und/oder Software-Ressourcen des zweiten mobilen Kommunikationsgeräts 101b bereitzustellen, falls die erfasste Position des zweiten mobilen Kommunikationsgeräts 101b in den definierten Positionsbereich 304 fällt.

Bei den Hardware- und/oder Software-Ressourcen des zweiten mobilen Kommunikationsgeräts 101b kann es sich beispielsweise um Rechenleistung, Speicherplatz und/oder eine auf dem zweiten mobilen Kommunikationsgerät 101b implementierte Applikation handeln.

Bei dem definierten Positionsbereich 304 kann es sich um einen baulich lokal begrenzten Bereich, wie beispielsweise ein Büro, handeln. Ebenso kann der Positionsbereich 304 durch einen Maximalabstand (beispielsweise 10 Meter) von dem ersten Kommunikationsgerät 101a definiert werden. Ferner kann der Positionsbereich 304 durch die von der Basisstation 303 definierte Funkzelle definiert werden, in der sich auch das erste Kommunikationsgerät 101a befindet.

In einer Ausführungsform ist der Prozessor 309a der Netzwerkmanagemententität 309 ferner ausgebildet, zu überprüfen, ob das erste Kommunikationsgerät 101a eine Berechtigung dafür aufweist, auf die vom zweiten mobilen Kommunikationsgerät 101b bereitgestellten Ressourcen in der Netzwerk-Slice 308 zuzugreifen.

Ebenso kann der Prozessor 309a der Netzwerkmanagemententität 309 in einer Ausführungsform ausgebildet sein, zu überprüfen, ob das zweite mobile Kommunikationsgerät 101b eine Berechtigung dafür aufweist, in die Netzwerk-Slice 308 eingebunden zu werden.

Der Prozessor 309a der Netzwerkmanagemententität 309 ist ferner ausgebildet, über die Kommunikationsschnittstelle 309b eine Applikation auf dem zweiten mobilen Kommunikationsgerät 101b frei zu schalten, um mittels der Applikation Softwareressourcen des zweiten mobilen Kommunikationsgeräts 101b bereitzustellen. Eine solche Applikation kann bereits auf dem zweiten mobilen Endgerät 101b vorhanden sein. In einer Ausführungsform ist der Prozessor 309a der Netzwerkmanagemententität 309 ausgebildet, eine Auswahl aus den auf dem zweiten mobilen Kommunikationsgerät 101b vorhandenen Hardware- und/oder Software-Ressourcen zu treffen, um die ausgewählten Hardware- und/oder Software-Ressourcen der Netzwerk-Slice 308 zur Verfügung zu stellen. In einer Ausführungsform kann der Prozessor 309a beispielsweise eine oder mehrere auf dem zweiten mobilen Kommunikationsgerät 101b implementierte Applikationen auswählen. Gemäß einer weiteren Ausführungsform kann eine solche Applikation vom Prozessor 309a über die Kommunikationsschnittstelle 309b auf dem zweiten mobilen Kommunikationsgerät 101b bereitgestellt werden.

In einer Ausführungsform ist der Prozessor 309a der Netzwerkmanagemententität 309 ferner ausgebildet, sobald das zweite mobile Kommunikationsgerät 101b in die Netzwerk-Slice 308 eingebunden worden ist, über die Kommunikationsschnittstelle 309b das erste Kommunikationsgerät 101a über die vom zweiten mobilen Kommunikationsgerät 101b bereitgestellten Hardware- und/oder Software-Ressourcen zu informieren.

In einer Ausführungsform ist der Prozessor 309a der Netzwerkmanagemententität 309 ferner ausgebildet, zumindest einen Teil der weiteren Ressourcen der Netzwerk-Slice 308 auf der Grundlage der vom zweiten mobilen Kommunikationsgerät 101b bereitgestellten Hardware- und/oder Software-Ressourcen anzupassen.

In einer Ausführungsform ist der Prozessor 309a der Netzwerkmanagemententität 309 ferner ausgebildet, das zweite mobile Endgerät 101b aus der Netzwerk-Slice 308 wieder zu entfernen, falls das zweite mobile Endgerät 101b den vordefinierten Positionsbereich 304 wieder verlässt.

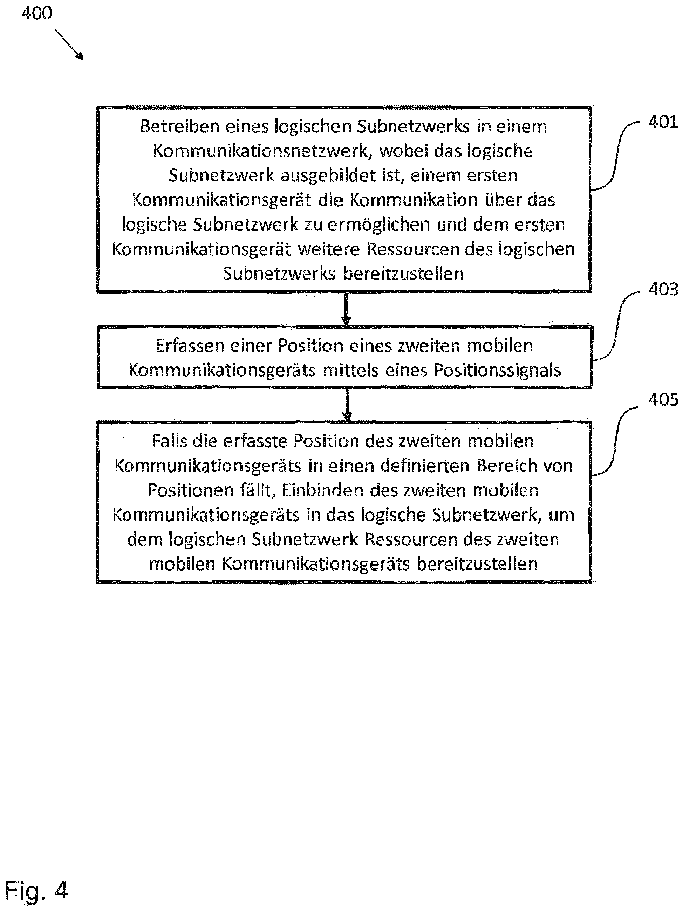

Figur 4 zeigt eine schematische Darstellung eines Verfahrens 400 zum Betreiben des Kommunikationsnetzwerks 305 gemäß einer Ausführungsform. Das Verfahren 400 umfasst einen Schritt 401 des Betreibens eines logischen Subnetzwerks in Form einer Netzwerk-Slice 308 in dem Kommunikationsnetzwerk 305, wobei das logische Subnetzwerk 308 ausgebildet ist, dem ersten Kommunikationsgerät 101a die Kommunikation über das logische Subnetzwerk 308 zu ermöglichen und dem ersten Kommunikationsgerät 101a weitere Ressourcen des logischen Subnetzwerks 308 bereitzustellen. Das Verfahren 400 umfasst ferner einen Schritt 403 des Erfassens einer Position des zweiten mobilen Kommunikationsgeräts 101b mittels eines Positionssignals. Das Verfahren 400 umfasst schließlich einen Schritt 405 des Einbindens des zweiten mobilen Kommunikationsgeräts 101b in das logische Subnetzwerk 308, falls die erfasste Position des zweiten mobilen Kommunikationsgeräts 101b in einen definierten Bereich von Positionen fällt, um dem logischen Subnetzwerk 308 Ressourcen des zweiten mobilen Kommunikationsgeräts 101b bereitzustellen.

## Patentansprüche

1. Netzwerkmanagemententität (309) für ein Kommunikationsnetzwerk (305), wobei die Netzwerkmanagemententität (309) umfasst:
einen Prozessor (309a), welcher ausgebildet ist, eine Netzwerk-Slice (308) in dem Kommunikationsnetzwerk (305) zu betreiben, wobei die Netzwerk-Slice (308) ausgebildet ist, einem ersten Kommunikationsgerät (101a) die Kommunikation über die Netzwerk-Slice (308) zu ermöglichen und dem ersten Kommunikationsgerät (101a) weitere Ressourcen der Netzwerk-Slice (308) bereitzustellen; und
eine Kommunikationsschnittstelle (309b), welche ausgebildet ist, ein Positionssignal von einer Erfassungsreinrichtung zu empfangen, wobei das Positionssignal eine Position eines zweiten mobilen Kommunikationsgeräts (101b) anzeigt;
**dadurch gekennzeichnet, dass** der Prozessor (309a) ferner ausgebildet ist, das zweite mobile Kommunikationsgerät (101b) in die Netzwerk-Slice (308) einzubinden, um der Netzwerk-Slice (308) wenigstens eine Ressource des zweiten mobilen Kommunikationsgeräts (101b) bereitzustellen, falls die erfasste Position des zweiten mobilen Kommunikationsgeräts (101b) in einen definierten Positionsbereich (304) fällt; und
wobei der Prozessor (309a) ferner ausgebildet ist, über die Kommunikationsschnittstelle (309b) eine Applikation auf dem zweiten mobilen Kommunikationsgerät (101b) frei zu schalten und wobei die Applikation zumindest einen Teil der Ressource des zweiten mobilen Kommunikationsgeräts (101b) bereitstellt.

2. Netzwerkmanagemententität (309) nach Anspruch 1, wobei der Prozessor (309a) ferner ausgebildet ist, zu überprüfen, ob das erste Kommunikationsgerät (101a) eine Berechtigung dafür aufweist, auf die vom zweiten mobilen Kommunikationsgerät (101b) bereitgestellte Ressource in dem logischen Subnetzwerk (308) zuzugreifen.

3. Netzwerkmanagemententität (309) nach Anspruch 1 oder 2, wobei der Prozessor (309a) ferner ausgebildet ist, zu überprüfen, ob das zweite mobile Kommunikationsgerät (101b) eine Berechtigung dafür aufweist, in das logische Subnetzwerk (308) eingebunden zu werden.

4. Netzwerkmanagemententität (309) nach Anspruch 1, wobei der Prozessor (309a) ferner ausgebildet ist, die Applikation über die Kommunikationsschnittstelle (309b) auf dem zweiten mobilen Kommunikationsgerät (101b) bereitzustellen, um zumindest einen Teil der Ressource des zweiten mobilen Kommunikationsgeräts (101b) bereitzustellen.

5. Netzwerkmanagemententität (309) nach einem der vorstehenden Ansprüche, wobei der Prozessor (309a) ferner ausgebildet ist, über die Kommunikationsschnittstelle (309b) das erste Kommunikationsgerät (101a) über die vom zweiten mobilen Kommunikationsgerät (101b) bereitgestellte Ressource zu informieren.

6. Netzwerkmanagemententität (309) nach einem der vorstehenden Ansprüche, wobei der Prozessor (309a) ferner ausgebildet ist, zumindest einen Teil der weiteren Ressourcen des logischen Subnetzwerks (308) auf der Grundlage der vom zweiten mobilen Kommunikationsgerät (101b) bereitgestellte Ressource anzupassen.

7. Verfahren (400) zum Betreiben eines Kommunikationsnetzwerkes (305), wobei das Verfahren (400) umfasst:
Betreiben (401) einer Netzwerk-Slice (308) in dem Kommunikationsnetzwerk (305), wobei die Netzwerk-Slice (308) ausgebildet ist, einem ersten Kommunikationsgerät (101a) die Kommunikation über die Netzwerk-Slice (308) zu ermöglichen und dem ersten Kommunikationsgerät (101a) weitere Ressourcen der Netzwerk-Slice (308) bereitzustellen;
Erfassen (403) einer Position eines zweiten mobilen Kommunikationsgeräts (101b) mittels eines Positionssignals; und **dadurch gekennzeichnet, dass** falls die erfasste Position des zweiten mobilen Kommunikationsgeräts (101b) in einen definierten Positionsbereich (304) fällt, Einbinden (405) des zweiten mobilen Kommunikationsgeräts (101b) in die Netzwerk-Slice (308), um der Netzwerk-Slice (308) wenigstens eine Ressource des zweiten mobilen Kommunikationsgeräts (101b) bereitzustellen,
wobei das Verfahren (400) den weiteren Schritt umfasst, eine Applikation auf dem zweiten mobilen Kommunikationsgerät (101b) frei zu schalten, wobei die Applikation zumindest einen Teil der Ressource des zweiten mobilen Kommunikationsgeräts (101b) bereitstellt.

8. Verfahren (400) nach Anspruch 7, wobei das Verfahren (400) den weiteren Schritt umfasst, dass überprüft wird, ob das erste Kommunikationsgerät (101a) eine Berechtigung dafür aufweist, auf die vom zweiten mobilen Kommunikationsgerät (101b) bereitgestellte Ressource in dem logischen Subnetzwerk (308) zuzugreifen.

9. Verfahren (400) nach Anspruch 7 oder 8, wobei das Verfahren (400) den weiteren Schritt umfasst, dass überprüft wird, ob das zweite mobile Kommunikationsgerät (101b) eine Berechtigung dafür aufweist, in das logische Subnetzwerk (308) eingebunden zu werden.

10. Verfahren (400) nach Anspruch 7, wobei das Verfahren (400) den weiteren Schritt umfasst, dass die Applikation auf dem zweiten mobilen Kommunikationsgerät (101b) von einer Netzwerkmanagemententität (309) des Kommunikationsnetzwerkes (305) bereitgestellt wird, um zumindest einen Teil der Ressource des zweiten mobilen Kommunikationsgeräts (101b) bereitzustellen.

11. Verfahren (400) nach einem der Ansprüche 7 bis 10, wobei das Verfahren (400) den weiteren Schritt umfasst, das erste Kommunikationsgerät (101a) über die vom zweiten mobilen Kommunikationsgerät (101b) bereitgestellte Ressource zu informieren.

12. Verfahren (400) nach einem der Ansprüche 7 bis 11, wobei das Verfahren (400) den weiteren Schritt umfasst, zumindest einen Teil der weiteren Ressourcen des logischen Subnetzwerks (308) auf der Grundlage der vom zweiten mobilen Kommunikationsgerät (101b) bereitgestellten Ressource anzupassen.

13. Computerprogrammprodukt mit Computerprogrammcode zur Durchführung des Verfahrens (400) nach einem der Ansprüche 7 bis 12 auf einem Prozessor.

## Claims

1. Network management entity (309) for a communication network (305), wherein the network management entity (309) comprises:
a processor (309a) configured to operate a network slice (308) in the communication network (305), wherein the network slice (308) is configured to allow a first communication device (101a) to communicate via the network slice (308) and to provide the first communication device (101a) with further resources of the network slice (308); and
a communication interface (309b) configured to receive a position signal from a detection device, wherein the position signal displays a position of a second mobile communication device (101b);
**characterized in that**
the processor (309a) is further configured to incorporate the second mobile communication device (101b) into the network slice (308) in order to provide the network slice (308) with at least one resource of the second mobile communication device (101b) if the detected position of the second mobile communication device (101b) falls into a defined position range (304); and
wherein the processor (309a) is further configured to use the communication interface (309b) to enable an application on the second mobile communication device (101b) and wherein the application provides at least some of the resource of the second mobile communication device (101b) .

2. Network management entity (309) according to Claim 1, wherein the processor (309a) is further configured to check whether the first communication device (101a) has an authorization to access the resource provided by the second mobile communication device (101b) in the logical sub-network (308).

3. Network management entity (309) according to Claim 1 or 2, wherein the processor (309a) is further configured to check whether the second mobile communication device (101b) has an authorization to be incorporated into the logical sub-network (308).

4. Network management entity (309) according to Claim 1, wherein the processor (309a) is further configured to provide the application on the second mobile communication device (101b) by means of the communication interface (309b) in order to provide at least some of the resource of the second mobile communication device (101b) .

5. Network management entity (309) according to one of the preceding claims, wherein the processor (309a) is further configured to use the communication interface (309b) to inform the first communication device (101a) about the resource provided by the second mobile communication device (101b).

6. Network management entity (309) according to one of the preceding claims, wherein the processor (309a) is further configured to adapt at least some of the further resources of the logical sub-network (308) on the basis of the resource provided by the second mobile communication device (101b).

7. Method (400) for operating a communication network (305), wherein the method (400) comprises:
operating (401) a network slice (308) in the communication network (305), wherein the network slice (308) is configured to allow a first communication device (101a) to communicate via the network slice (308) and to provide the first communication device (101a) with further resources of the network slice (308);
detecting (403) a position of a second mobile communication device (101b) by means of a position signal; and **characterized by**,
if the detected position of the second mobile communication device (101b) falls into a defined position range (304), incorporating (405) the second mobile communication device (101b) into the network slice (308) in order to provide the network slice (308) with at least one resource of the second mobile communication device (101b),
wherein the method (400) comprises the further step of enabling an application on the second mobile communication device (101b), wherein the application provides at least some of the resource of the second mobile communication device (101b).

8. Method (400) according to Claim 7, wherein the method (400) comprises the further step of a check being performed to determine whether the first communication device (101a) has an authorization to access the resource provided by the second mobile communication device (101b) in the logical sub-network (308).

9. Method (400) according to Claim 7 or 8, wherein the method (400) comprises the further step of a check being performed to determine whether the second mobile communication device (101b) has an authorization to be incorporated into the logical sub-network (308).

10. Method (400) according to Claim 7, wherein the method (400) comprises the further step of the application being provided on the second mobile communication device (101b) by a network management entity (309) of the communication network (305) in order to provide at least some of the resource of the second mobile communication device (101b).

11. Method (400) according to one of Claims 7 to 10, wherein the method (400) comprises the further step of informing the first communication device (101a) about the resource provided by the second mobile communication device (101b).

12. Method (400) according to one of Claims 7 to 11, wherein the method (400) comprises the further step of adapting at least some of the further resources of the logical sub-network (308) on the basis of the resource provided by the second mobile communication device (101b) .

13. Computer program product having computer program code for performing the method (400) according to one of Claims 7 to 12 on a processor.

## Revendications

1. Entité de gestion de réseau (309) pour un réseau de communication (305), dans laquelle l'entité de gestion de réseau (309) comprend :
un processeur (309a), lequel est conçu pour faire fonctionner une tranche de réseau (308) dans le réseau de communication (305), dans laquelle la tranche de réseau (308) est conçue pour permettre à un premier appareil de communication (101a) de communiquer par l'intermédiaire de la tranche de réseau (308) et pour fournir des ressources supplémentaires de la tranche de réseau (308) au premier appareil de communication (101a) ; et
une interface de communication (309b), laquelle est conçue pour recevoir un signal de position en provenance d'un dispositif de détection, dans lequel le signal de position indique une position d'un deuxième appareil de communication mobile (101b) ;
**caractérisé en ce que** le processeur (309a) est en outre conçu pour intégrer le deuxième appareil de communication mobile (101b) dans la tranche de réseau (308) afin de fournir à la tranche de réseau (308) au moins une ressource du deuxième appareil de communication mobile (101b) si la position détectée du deuxième appareil de communication mobile (101b) se situe dans une zone de positions définie (304) ; et
dans laquelle le processeur (309a) est en outre conçu pour activer une application sur le deuxième appareil de communication mobile (101b) par l'intermédiaire de l'interface de communication (309b) et dans laquelle l'application fournit au moins une partie de la ressource du deuxième appareil de communication mobile (101b).

2. Entité de gestion de réseau (309) selon la revendication 1, dans laquelle le processeur (309a) est en outre conçu pour vérifier si le premier appareil de communication (101a) a l'autorisation d'accéder à la ressource fournie par le deuxième appareil de communication mobile (101b) dans le sous-réseau logique (308) .

3. Entité de gestion de réseau (309) selon la revendication 1 ou 2, dans laquelle le processeur (309a) est en outre conçu pour vérifier si le deuxième appareil de communication mobile (101b) a l'autorisation d'être intégré dans le sous-réseau logique (308).

4. Entité de gestion de réseau (309) selon la revendication 1, dans laquelle le processeur (309a) est en outre conçu pour fournir l'application par l'intermédiaire de l'interface de communication (309b) du deuxième appareil de communication mobile (101b) afin de fournir au moins une partie de la ressource du deuxième appareil de communication mobile (101b).

5. Entité de gestion de réseau (309) selon l'une des revendications précédentes, dans laquelle le processeur (309a) est en outre conçu pour informer le premier appareil de communication (101a) de la ressource fournie par le deuxième appareil de communication mobile (101b) par l'intermédiaire de l'interface de communication (309b).

6. Entité de gestion de réseau (309) selon l'une des revendications précédentes, dans laquelle le processeur (309a) est en outre conçu pour adapter au moins une partie des ressources supplémentaires du sous-réseau logique (308) sur la base de la ressource fournie par le deuxième appareil de communication mobile (101b).

7. Procédé (400) de fonctionnement d'un réseau de communication (305), dans lequel le procédé (400) comprend les étapes consistant à :
faire fonctionner (401) une tranche de réseau (308) dans le réseau de communication (305), dans lequel la tranche de réseau (308) est conçue pour permettre à un premier appareil de communication (101a) de communiquer par l'intermédiaire de la tranche de réseau (308) et pour fournir des ressources supplémentaires de la tranche de réseau (308) au premier appareil de communication (101a) ;
détecter (403) une position d'un deuxième appareil de communication mobile (101b) au moyen d'un signal de position ; et
**caractérisé en ce que** le deuxième appareil de communication mobile (101b) est intégré (405) dans la tranche de réseau (308) afin de fournir à la tranche de réseau (308) au moins une ressource du deuxième appareil de communication mobile (101b) si la position détectée du deuxième appareil de communication mobile (101b) se situe dans une zone de positions définie (304),
dans lequel le procédé (400) comprend l'étape supplémentaire consistant à activer une application sur le deuxième appareil de communication mobile (101b), dans lequel l'application fournit au moins une partie de la ressource du deuxième appareil de communication mobile (101b) .

8. Procédé (400) selon la revendication 7, dans lequel le procédé (400) comprend l'étape supplémentaire consistant à vérifier si le premier appareil de communication (101a) a l'autorisation d'accéder à la ressource fournie par le deuxième appareil de communication mobile (101b) dans le sous-réseau logique (308) .

9. Procédé (400) selon la revendication 7 ou 8, dans lequel le procédé (400) comprend l'étape supplémentaire consistant à vérifier si le deuxième appareil de communication mobile (101b) a l'autorisation d'être intégré dans le sous-réseau logique (308).

10. Procédé (400) selon la revendication 7, dans lequel le procédé (400) comprend l'étape supplémentaire consistant à fournir l'application sur le deuxième appareil de communication mobile (101b) à partir d'une entité de gestion de réseau (309) du réseau de communication (305) afin de fournir au moins une partie de la ressource du deuxième appareil de communication mobile (101b).

11. Procédé (400) selon l'une des revendications 7 à 10, dans lequel le procédé (400) comprend l'étape supplémentaire consistant à informer le premier appareil de communication (101a) de la ressource fournie par le deuxième appareil de communication mobile (101b).

12. Procédé (400) selon l'une des revendications 7 à 11, dans lequel le procédé (400) comprend l'étape supplémentaire consistant à adapter au moins une partie des ressources supplémentaires du sous-réseau logique (308) sur la base de la ressource fournie par le deuxième appareil de communication mobile (101b).

13. Produit de programme d'ordinateur comportant un code de programme d'ordinateur destiné à mettre en oeuvre le procédé (400) selon l'une des revendications 7 à 12 sur un processeur.
